Europäisches Patentamt

European Patent Office

Office européen des brevets

(11) Veröffentlichungsnummer: **0 340 681**
**A2**

# (12) EUROPÄISCHE PATENTANMELDUNG

(21) Anmeldenummer: **89107803.2**

(22) Anmeldetag: **28.04.89**

(51) Int. Cl.⁴: **B23Q 5/10**

(30) Priorität: **05.05.88 DE 3815380**

(43) Veröffentlichungstag der Anmeldung:
**08.11.89 Patentblatt 89/45**

(84) Benannte Vertragsstaaten:
**AT BE CH DE ES FR GB GR IT LI LU NL SE**

(71) Anmelder: **Friedrich Deckel
Aktiengesellschaft
Plinganserstrasse 150
D-8000 München 70(DE)**

(72) Erfinder: **Geiger, Michael, Dipl.-Ing.,
Ina-Seidel-Weg 8
D-8130 Starnberg(DE)**

(54) Drehbearbeitungseinrichtung für Bohr- und Fräsmaschinen.

(57) Die Erfindung betrifft eine Drehbearbeitungseinrichtung (20), als autonome Funktionseinheit auf den
Werkstücktisch 14 der Maschine aufgesetzt werden
kann. Sie umfaßt ein Spindelgehäuse (32), in welchem die das Spannfutter (48) tragende Spindel (36)
gelagert ist. Ein Spindelantriebsmotor (40,42) ist
ebenfalls im Spindelgehäuse (32) angeordnet.

Das Spindelgehäuse (32) umfaßt Mittel (34) zum
Aufspannen auf dem Werkstücktisch 14 sowie Mittel
(44,46;56,58) zum Kuppeln des Antriebsmotors
(40,42) mit einer außerhalb der Einrichtung liegenden Energiequelle sowie gegebenenfalls Mittel
(52,54) zum Kuppeln eines Betätigungsantriebes (50)
für das Spannfutter (48) mit einer außerhalb der
Einrichtung liegenden Energiequelle.

FIG. 2

EP 0 340 681 A2

## Drehbearheitungseinrichtung für Bohr- und Fräsmaschinen

Die Erfindung betrifft eine Drehbearbeitungseinrichtung der im Oberbegriff des Anspruches 1 genannten Art.

Moderne Bohr- und Fräsmaschinen werden immer mehr zu universellen Bearbeitungszentren ausgebaut, die eine möglichst vielseitige Bearbeitung von Werkstücken ermöglichen. Es wurde immer als nachteilig empfunden, daß Drehbearbeitungsvorgänge mit derartigen Maschinen nicht möglich sind. Vor allem dann, wenn Bohr- und Fräsmaschinen zu flexiblen Fertigungszentren zusammengestellt sind, ist es wichtig, daß zumindest einfachere Drehbearbeitungen mit diesen Maschinen möglich sind, damit Werkstücke, an denen außer Bohr- und Fräsarbeiten auch Dreharbeiten auszuführen sind, nicht für diese letzteren Arbeiten aus dem Fertigungsfluß herausgenommen und auf gesonderte Drehmaschinen aufgespannt werden müssen.

Es ist bereits eine Drehbearbeitungseinrichtung der im Oberbegriff des Anspruches 1 genannten Art bekannt, bei der das Werkstück-Spannfutter direkt auf einen drehbaren Werkstücktisch aufgespannt wird, so daß die Drehfähigkeit des Werkstücktisches als Arbeitsbewegung für den Drehvorgang ausgenutzt wird. Da Drehtische für Bohr- und Fräsmaschinen im allgemeinen sowohl bezüglich der Drehlagerung als auch des Drehantriebes nicht für Drehzahlen ausgelegt sind, wie sie für Drehbearbeitungen erforderlich sind, mußten im Falle der bekannten Drehbearbeitungseinrichtung erhebliche konstruktive Änderungen am Drehtisch vorgenommen werden. Zunächst mußte seine Lagerung so ausgelegt werden, daß diese auch für höhere Drehzahlen, beispielsweise 1000 Upm oder mehr geeignet ist. Außerdem wurde neben dem üblichen Schneckenantrieb für die Drehschaltbewegung des Drehtisches ein gesonderter, schnell-laufender Antrieb vorgesehen, welcher bei der Drehbearbeitung wirksam wird. Zu diesem Zweck mußte der Schneckenantrieb von der Drehtischachse abgekoppelt werden können, damit er bei den hohen Drehzahlen nicht ständig mitgenommen werden mußte. Insgesamt ergab sich dadurch eine konstruktiv sehr aufwendige und damit teuere Einrichtung. Da Drehbearbeitungen auf Bohr- und Fräsmaschinen im allgemeinen relativ selten vorkommen, ergibt sich als weiterer Nachteil der bekannten Einrichtung, daß deren Ausnutzungsgrad und damit die Möglichkeit zur Amortisation relativ schlecht sind. Ein weiterer Nachteil der bekannten Einrichtung wird auch darin gesehen, daß wegen der weit auseinanderliegenden Forderungen für den Schaltbetrieb des Drehtisches einerseits und den Drehbearbeitungsbetrieb andererseits dieser weder für die eine Betriebsart noch für die andere Betriebsart optimal ausgelegt werden kann.

Ein weiterer Nachteil der bekannten Einrichtung besteht auch darin, daß die Drehbearbeitungseinrichtung nur im Zusammenhang mit einem Dreh- bzw. Rundschalttisch vorgesehen sein kann. Ein Anwender, der für einen derartigen Dreh- bzw. Rundschalttisch keinen Bedarf hat, muß entweder auch auf die Drehbearbeitungseinrichtung verzichten oder er muß, um Drehbearbeitungen ausführen zu können, auch die Dreh- und Rundschalteinrichtung kaufen, die sich nie amortisieren wird.

Es ist die Aufgabe der vorliegenden Erfindung, eine Drehbearbeitungseinrichtung für Bohr- und Fräsmaschinen der im Oberbegriff des Anspruches 1 genannten Art zu schaffen, die keinen tiefgreifenden konstruktiven Eingriff in die bestehende Maschine verlangt, die einfach und damit preiswert ist und die auch an unterschiedliche Drehbearbeitungsaufgaben optimal angepaßt sein kann. Diese Aufgabe ist erfindungsgemäß durch die im Kennzeichen des Anspruches 1 enthaltenen Merkmale gelöst.

Die Drehbearbeitungseinrichtung gemäß der vorliegenden Erfindung ist als selbständige Funktionseinheit ausgebildet. Sie umfaßt ein Spindelgehäuse mit einer Spindel und einem Spindelantrieb und kann als Ganzes auf jeden Werkstücktisch einer Bohr- und Fräsmaschine, d.h. beispielsweise auch auf einen Starrtisch, aufgespannt werden. Ein konstruktiver Eingriff in den Aufbau eines gegebenenfalls vorhandenen Dreh-bzw. Rundschalttisches ist nicht erforderlich, so daß die Bohr- und Fräsmaschine insoweit vollkommen unverändert bleiben kann. Es sind demnach keine konstruktiven Kompromisse erforderlich, die beispielsweise die Eigenschaften des Rund-bzw. Schalttisches nachteilig beeinflussen. Da die erfindungsgemäße Drehbearbeitungseinrichtung eine von der Maschine unabhängige Funktionseinheit ist, kann sie beispielsweise hinsichtlich der Spindellagerung und des Antriebes optimal auf die ihr zugedachte Drehbearbeitungsaufgabe abgestimmt sein. Außerdem besteht beispielsweise die Möglichkeit, die Drehbearbeitungseinrichtung bei mehreren Bohr- und Fräsmaschinen zu verwenden, so daß ihre Amortisationsmöglichkeiten beträchtlich verbessert werden.

Die Handhabung der Drehbearbeitungseinrichtung ist sehr einfach. Sie wird auf den Werkstücktisch der Bohr- und Fräsmaschine aufgesetzt und über die vorgesehenen Aufspannmittel auf diesem befestigt. Dann werden die Kupplungsmittel für den Anschluß des Antriebsmotors an eine Energiequelle angeschlossen. Wenn die Bohr- und Fräsmaschine mit einem Dreh- bzw. Rundschalttisch ausgestattet ist, wird dieser lediglich mit den ohnehin vorgesehenen Klemmitteln arretiert. Ein Auskuppeln des Antriebes für den Dreh- bzw. Rundschalttisch ist nicht erforderlich.

Moderne Bohr- und Fräsmaschinen sind im allgemeinen zur Aufnahme von Werkstück-Wechselpaletten ausgebildet, die den Maschinen automatisch zugeführt werden und auf diesen automatisch gespannt werden. Diese Werkstückpaletten sind mit palettenseitigen Aufspanneinrichtungen versehen, die mit entsprechenden, werkstück seitigen Aufspanneinrichtungen zusammenwirken. Bei Bohr- und Fräsmaschinen dieser Art ist in weiterer Ausgestaltung der Erfindung vorgesehen, daß die am Spindelgehäuse angeordneten Aufspannmittel derartigen palettenseitigen Aufspanneinrichtungen entsprechen. Diese Ausgestaltung macht es möglich, daß die erfindungsgemäße Drehbearbeitungseinrichtung wie eine Werkstück-Wechselpalette automatisch auf dem Werkstücktisch aufspannbar bzw. von diesem wieder entfernbar ist, so daß ein eventuell erforderlicher, zwischengeschalteter Drehbearbeitungsvorgang ebenfalls in den vollautomatischen Bearbeitungsvorgang einbezogen werden kann.

Um beispielsweise an einem in der Drehbearbeitungseinrichtung eingespannten Werkstück auch Bohr- und Fräsarbeiten ausführen zu können, ist in weiterer Ausgestaltung der Erfindung vorgesehen, daß die Spindel der Drehbearbeitungseinrichtung gegenüber dem Spindelgehäuse in beliebigen Drehwinkelstellungen arretierbar ist. In vielen Fällen ergibt sich dadurch die Möglichkeit, daß am Werkstück in einer Aufspannung sowohl Dreharbeiten als auch Fräs- und Bohrarbeiten ausgeführt werden können.

Um ein vollautomatisches Einwechseln und Auswechsein der Drehbearbeitungseinrichtung zu ermöglichen, ist weiterhin erfindungsgemäß vorgesehen, daß die Kupplungsmittel für den Anschluß des Antriebsmotors an eine Energiequelle ein am Spindelgehäuse angeordnetes, mit dem Antriebsmotor verbundenes Kupplungsteil umfassen, welches in der Aufspanneinstellung des Spindelgehäuses automatisch mit einem am Werkstücktisch angeordneten, mit einer Energiequelle verbundenen Kupplungsteil kuppelt.

Der Antriebsmotor kann von beliebiger Art sein; in bevorzugter Ausgestaltung ist der Antriebsmotor ein Elektromotor und die Energiequelle eine elektrische Stromquelle.

Eine besonders einfache und kompakte Bauweise für die Drehbearbeitungseinrichtung ergibt sich erfindungsgemäß dann, wenn die Motorwelle des Elektromotors gleichzeitig als Spindel der Drehbearbeitungseinrichtung ausgebildet ist. Die Spindel trägt demnach die Läuferwicklung, während die Ständerwicklung im Spindelgehäuse angeordnet ist.

Eine weitere Verbesserung der Automatisierungsmöglichkeiten ergibt sich dann, wenn gemäß einer weiteren Ausgestaltung der Erfindung das Spannfutter mit einem Betätigungsantrieb versehen ist. Dieser Betätigungsantrieb ist vorzugsweise mit einem am Spindelgehäuse angeordneten Kupplungsteil verbunden, welches mit einem mit einer Energiequelle verbundenen Kupplungsteil kuppelbar ist. Auch diese beiden Kupplungsteile können so ausgebildet sein, daß sie bei der Spannstellung des Spindelgehäuses automatisch kuppeln.

Der Betätigungsantrieb für das Spannfutter ist vorzugsweise als hydraulischer Stellantrieb ausgebildet, welcher über die Kupplungsteile mit einer außerhalb der Maschine angeordneten Druckmittelquelle verbunden wird.

Wenn die Bohr- und Fräsmaschine einen drehbaren Werkstücktisch, beispielsweise einen Drehoder Rundschalttisch, hat, dann sind die Kupplungsteile vorzugsweise mit Drehdurchführungen ausgestattet, so daß die Kupplungsteile auch dann gekuppelt bleiben können, wenn der drehbare Werkstücktisch in Funktion ist.

Ein Ausführungsbeispiel der Erfindung ist in der Zeichnung dargestellt und im folgenden näher beschrieben. Es zeigen:

Figur 1 schematisch in einer Seitenansicht eine Bohr- und Fräsmaschine mit einem Werkstücktisch und einer auf den Werkstücktisch aufgesetzten Drehbearbeitungseinrichtung;

Figur 2 eine Drehbearbeitungseinrichtung gemäß Figur 1 in vergrößerter Darstellung.

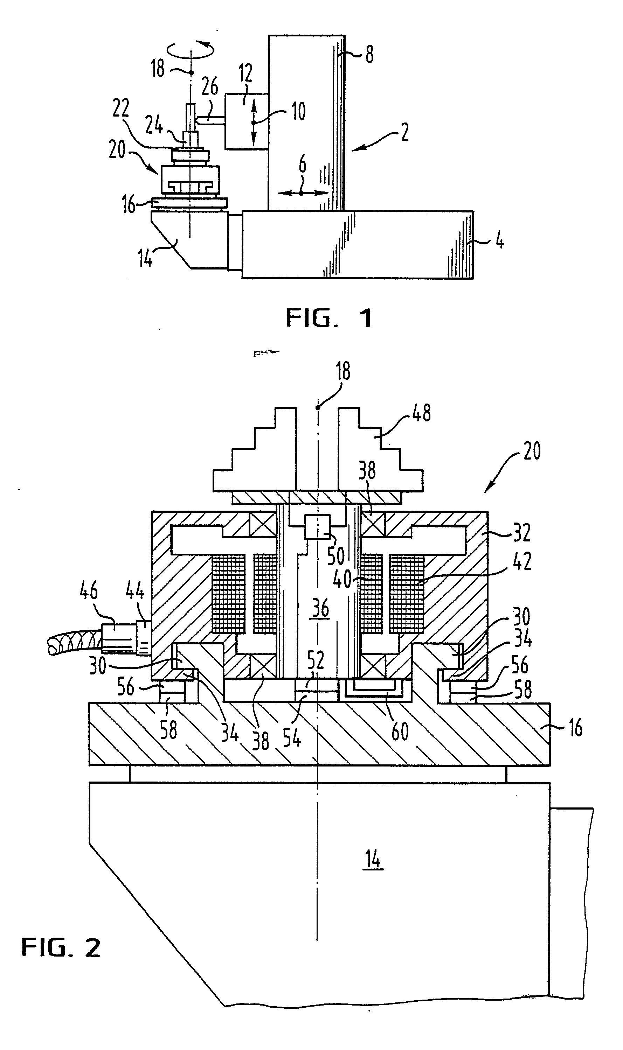

Die in Figur 1 dargestellte Bohr- und Fräsmaschine 2 weist ein Maschinenbett 4, einen darauf horizontal in Richtung des Pfeiles 6 verfahrbaren Ständer 8, einen am Ständer 8 in vertikaler Richtung 10 verfahrbaren Spindelkopf 12 und einen am Maschinenständer 4 befestigten Werkstücktisch 14 auf. Der Werkstücktisch 14 ist im dargestellten Ausführungsbeispiel als Rundschalttisch ausgebildet, d.h., daß die Tischplatte 16 sich um die Achse 18 drehen kann. Die Drehachse 18 kann in bekannter Weise eine NC-gesteuerte Achse sein, wie hier nicht näher beschrieben zu werden braucht.

Auf der Tischplatte 16 ist die als ganzes mit 20 bezeichnete Drehbearbeitungseinrichtung aufgesetzt und gespannt. An der Oberseite der Drehbearbeitungseinrichtung 20 ist ein drehangetriebenes Spannfutter 22 angeordnet, in welches ein zu drehendes Werkstück 24 eingespannt werden kann.

Der Spindelkopf 12 enthält eine Spindel, in die ein Werkzeug 26 eingespannt werden kann. Die nicht dargestellte Werkzeugspindel kann arretiert werden, so daß das Werkzeug 26 entsprechend einem Werkzeug bei Drehmaschinen zwar in Richtung mehrerer räumlicher Achsen verschoben, nicht jedoch um die Spindelachse verdreht werden kann.

Figur 2 zeigt den Werkstücktisch 14 mit der um die Achse 18 drehbar gelagerten Tischplatte 16. Diese Tischplatte 16 ist mit etwa L-förmigen Schienen 30 versehen, die im allgemeinen Bohr- und Fräsbetrieb zur Aufnahme von an sich bekannten Werkstück-Wechselpaletten dienen.

Die Drehbearbeitungseinrichtung 20 umfaßt ein Spindelgehäuse 32, welches mit Mitteln 34 für die Aufspannung des Spindelgehäuses 32 versehen ist. Diese Aufspannmittel 34 entsprechen den üblichen palettenseitigen Aufspanneinrichtungen, die mit den Schienen 30 zusammenwirken.

Im Spindelgehäuse 32 ist eine Spindel 36 über die Lager 38 drehbar gelagert. Die Spindel 36 ist mit einer Läuferwicklung 40 versehen, die von einer im Spindelgehäuse 32 angeordneten Ständerwicklung 42 zusammenwirkt. Die Ständerwicklung 42 ist in nicht näher dargestellter, üblicher Weise mit einem am Spindelgehäuse angeordneten Kupplungsteil 44 verbunden, welches mit einem Kupplungsteil 46 gekuppelt werden kann, das seinerseits mit einer nicht dargestellten Stromquelle verbunden ist.

An dem oberen Ende der Spindel 36 ist ein Spannfutter 48 angeordnet, in welches ein zu drehendes Werkstück eingespannt werden kann. Dieses Spannfutter 48 kann in an sich bekannter Weise als Mehrbackenfutter ausgebildet sein.

Das Spannfutter 48 ist mit einem Betätigungsantrieb 50 versehen, welcher eine kraftbetätigte Verstellung der Spannbakken des Spannfutters 48 ermöglicht. Der Betätigungsantrieb ist seinerseits mit einem am Spindelgehäuse 32 angeordneten Kupplungsteil 52 verbunden, welches bei der Aufspannstellung der Drehbearbeitungseinrichtung 20 mit einem am Werkstücktisch 14 angeordneten Kupplungsteil 54 kuppelt, wie an sich bekannt und deshalb nicht näher beschrieben worden ist. Der Betätigungsantrieb 50 ist vorzugsweise ein hydraulischer Stellantrieb, welcher über die Kupplungsteile 52,54 mit einer in der Maschine oder außerhalb der Maschine angeordneten Druckmittelquelle verbunden werden kann.

Die aus den Kupplungsteilen 44,46 bestehende Kupplung ist vorzugsweise für den Fall ausgelegt, daß der Werkstücktisch 14 ein Starrtisch ist. Wenn, wie im in Figur 2 dargestellten Ausführungsbeispiel die Tischplatte 16 drehbar ist, dann ist für den Anschluß des Antriebsmotors 40,42 vorzugsweise eine Kupplung mit Kupplungsteilen 56,58 vorgesehen, die jeweils eine Energiedurchführung auch bei drehender Tischplatte 16 ermöglichen. In diesem Fall ist auch die Kupplung mit den Kupplungsteilen 52,54 vorzugsweise mit einer Drehdurchführung für das Druckmittel versehen.

Mit 60 ist schematisch eine Arretierung bezeichnet, mittels der die Spindel 36 gegenüber dem Spindelgehäuse 32 in beliebigen Drehwinkelstellungen arretierbar ist, um dann mittels des Drehtisches 16 das in die Spannzange 48 eingespannte Werkstück winkelgenau positionieren zu können.

**Ansprüche**

1. Drehbearbeitungseinrichtung für Bohr- und Fräsmaschinen, umfassend ein auf dem Werkstücktisch angeordnetes, drehantreibbares Werkstück-Spannfutter, dadurch **gekennzeichnet**, daß die Drehbearbeitungseinrichtung (20) als Funktionseinheit mit einem Spindelgehäuse (32), einer im Spindelgehäuse (32) gelagerten, ein Spannfutter (48) tragenden Spindel (36) und einem im Spindelgehäuse (32) angeordneten, mit der Spindel (36) gekoppelten Antriebsmotor (40, 42) ausgebildet ist, daß das Spindelgehäuse (32) mit Mitteln (34) für seine Aufspannung auf dem Werkstücktisch (14) versehen ist, und daß am Spindelgehäuse (32) Kupplungsmittel (44,46; 56,58) für den Anschluß des Antriebsmotors (40,42) an eine Energiequelle vorgesehen sind.

2. Drehbearbeitungseinrichtung nach Anspruch 1, für Bohr-und Fräsmaschinen zur Aufnahme von Werkstückpaletten, wobei palettenseitige Aufspanneinrichtungen mit werkstücktischseitigen Aufspanneinrichtungen zusammenwirken, dadurch **gekennzeichnet**, daß die am Spindelgehäuse (32) angeordneten Aufspannmittel (34) den palettenseitigen Aufspanneinrichtungen entsprechen.

3. Drehbearbeitungseinrichtung nach Anspruch 1 oder 2, dadurch **gekennzeichnet**, daß die Spindel (36) gegenüber dem Spindelgehäuse (32) in beliebigen Drehwinkelstellungen arretierbar ist.

4. Drehbearbeitungseinrichtung nach einem der Ansprüche 1 bis 3, dadurch **gekennzeichnet**, daß die Kupplungsmittel (56;58) für den Anschluß an eine Energiequelle ein am Spindelgehäuse (32) angeordnetes mit dem Antriebsmotor (40,42) verbundenes Kupplungsteil (56) umfassen, welches in der Aufspannstellung des Spindelgehäuses (32) automatisch mit einem am Werkstücktisch (14, 16) angeordneten, mit einer Energiequelle verbundenen Kupplungsteil (58) kuppelt.

5. Drehbearbeitungseinrichtung nach einem der Ansprüche 1 bis 4, dadurch **gekennzeichnet**, daß der Antriebsmotor (40,42) ein Elektromotor und die Energiequelle eine elektrische Stromquelle ist.

6. Drehbearbeitungseinrichtung nach Anspruch 5, dadurch **gekennzeichnet**, daß die Motorwelle des Elektromotors (40,42) als Spindel (36) ausgebildet ist.

7. Drehbearbeitungseinrichtung nach einem der Ansprüche 1 bis 6, dadurch **gekennzeichnet,** daß das Spannfutter (48) mit einem Betätigungsantrieb (50) versehen ist.

8. Drehbearbeitungseinrichtung nach Anspruch 7, dadurch **gekennzeichnet,** daß der Betätigungsantrieb (50) für das Spannfutter (48) mit einem am Spindelgehäuse angeordneten Kupplungsteil (52) verbunden ist, welches mit einem mit einer Energiequelle verbundenen Kupplungsteil (54) kuppelbar ist.

9. Drehbearbeitungseinrichtung nach Anspruch 8, dadurch **gekennzeichnet,** daß der Betätigungsantrieb (50) als hydraulischer Stellantrieb ausgebildet ist und daß die Kupplungsteile (52,54) bei der Spannstellung des Spindelgehäuses (32) automatisch kuppeln.

10. Drehbearbeitungseinrichtung nach einem der Ansprüche 8 und 9, insbesondere für Bohr- und Fräsmaschinen mit drehbarem Werkstücktisch, dadurch **gekennzeichnet,** daß die Kupplungsteile (52,54;56,58) jeweils mit Drehdurchführungen ausgestattet sind.

FIG. 1

FIG. 2